Europäisches Patentamt

European Patent Office

Office européen des brevets

(11) Publication number: **0 311 887**

**A2**

## EUROPEAN PATENT APPLICATION

(21) Application number: 88116508.8

(22) Date of filing: 05.10.88

(51) Int. Cl.⁴ **C02F 3/12 , C02F 3/20**

A request for correction of the description and drawings has been filed pursuant to Rule 88 EPC. A decision on the request will be taken during the proceedings before the Examining Division (Guidelines for Examination in the EPO, A-V, 2.2).

(30) Priority: **13.10.87 PL 268213**

(43) Date of publication of application:
**19.04.89 Bulletin 89/16**

(84) Designated Contracting States:
**AT DE GR**

(71) Applicant: **POLITECHNIKA WROCLAWSKA**
**ul. Wybrzeze Stanislawa Wyspianskiego 27**
**50-370 Wroclaw(PL)**

(72) Inventor: **Grabska-Szafir, Dagmara**
**ul. Boguslawskiego 9/6**
**58-500 Jelenia Gora(PL)**
Inventor: **Modrzejewska, Barbara**
**ul. Okrezna 51**
**58-500 Jelenia Gora(PL)**
Inventor: **Mielczarek, Boguslaw**
**ul. Tczewska 2**
**58-500 Jelenia Gora(PL)**
Inventor: **Lukawska, Regina**
**ul. Na Skalkach 6/2**
**58-500 Jelenia Gora(PL)**
Inventor: **Zieba, Teresa**
**ul. Wyspianskiego 17**
**58-500 Jelenia Gora(PL)**
Inventor: **Bielowka, Jadwiga**
**ul. Elsnera 4/45**
**58-500 Jelenia Gora(PL)**
Inventor: **Dluzniewska, Urszula**
**ul. Graniczna 22**
**58-500 Jelenia Gora(PL)**

(74) Representative: **Finck, Dieter et al**
**Patentanwälte v. Füner, Ebbinghaus, Finck**
**Mariahilfplatz 2 & 3**
**D-8000 München 90(DE)**

(54) **Mechanical-biological sewage treatment plant.**

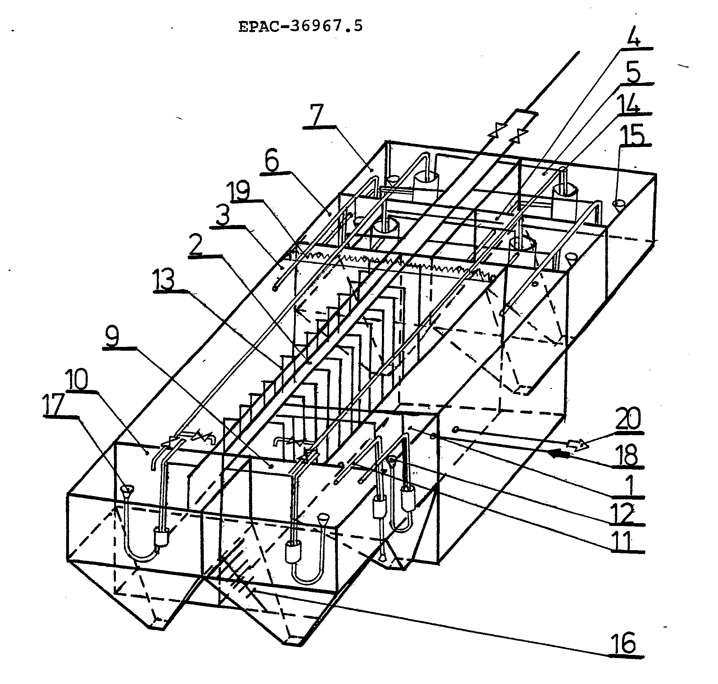

㉗ The subject of the invention is a mechanical-biological sewage treatment plant designed particularly for large tourist subjects, small towns and settlements and food processing plants. The gist of the invention, as shown in Fig. 1, consists in that the sand and screenings catcher /1/ and secondary sedimentation tanks /4, 5, 6, 7/ as well as stabilization tanks /8, 9/ are equipped with air lift pumps /13/ for removing surface scum, floating parts and liquids off the surface and that each activated sludge chamber /2, 3/ is equipped with aerating grid /11/ for deep aeraation and coupled with at least one secondary sedimentation tank /4, 6/ equipped with an air lift pump /14/ for removing sludge from the bottom.

## Mechanical-biological sewage treatment plant

The subject of the invention is a mechanical-biological sewage treatment plant, designed particularly for larger tourist objects, small towns and settlements and food-processing plants.

Polish patent specification No 119375 discloses a mechanical-biological sewage treatment plant, comprising an aeration unit, secondary sedimentation tank, contact chamber and sludge thickening chamber, wherein the aeration unit is equipped with sections of grid for moderate bubble aeration and the secondary sedimentation tank is equipped with a vertically disposed central pipe housing an air lift pump. The central pipe is connected by means of a duct with the aeration unit, whereas the outlet of the air lift pump is located in the aeraation unit and moreover the air lift pump is connected by means of a duct with the sludge thickening tank.

This sewage treatment plant has a substantial deficiency consisting in the fact that it does not provide possibility for applying two-stage activated sludge method. The next deficiency is that grates have to be manually cleaned from all impurities collected thereon. Moreover, excessive sediment in this case is hydrated to a higher degree. It also occupies larger areas due to separate location of excessive sludge thickening tank and obstructed excessive sludge transportation.

The gist of the invention is that the sand and screenings catcher as well as secondary sedimentation tanks and stabilization tanks are equipped with air lift pumps for removing surface scum, floating parts and liquids off the surface, and that each activated sludge chamber is equipped with aerating grid for deep aerating and coupled with at least one secondary sedimentation tank fitted with an air lift pump for removing sediment from the bottom.

A substantial advantage of the sewage treatment plant of the invention is that it provides possibility for application of the two-stage activated sludge method, allowing for utilization in treatment of sewage from food-processing plants. Further, it allows to eliminate manual cleaning of grates from impurities collecting thereon, as the function of collecting large particle sediments is taken over by the sand and screenings catcher, assembled with the activated sludge chamber. An essential advantage is that it allows exchange functions between secondary sedimentation tanks and stabilization units with sludge thickening, thus facilitating exchange between single- and two-stage sediment.

The subject of the invention is shown in an embodiment and in drawings, in which Fig. 1 presents a mechanical-biological sewage treatment plant with two-stage activated sludge, in axonometric view and Fig. 2 - an air lift pump for removing surface scum, floating parts and liquids in longitudinal section.

Mechanical-biological sewage treatment plant of the invention consists of the following combined elements: sand and screenings catcher /1/, two activated sludge chambers 2, 3, four secondary sedimentation tanks 4, 5, 6 and 7, two stabilization tanks 8, 9 with sludge thickening and contact chamber 10. Each activated sludge chamber 2 and 3 is equipped with sections of aerating grids 11 for deep aerating. Both stabilization tanks 8 and 9 with excessive sludge thickening are equipped with aerating grids 12 and air lift pumps 13 for removing over-sediment liquid, wherein the outlet of disposing duct of air lift pump 13, located in stabilization tank 8 with excessive sludge thickening is disposed in one activated sludge chamber 2, and the outlet of disposing air lift pump 13, located in stabilization tank 9 with excessive sludge thickening is disposed in the second activated sludge chamber 3. Each seconary sedimentation tank 4, 5, 6 and 7 is equipped with air lift pump 13 for removing surface scum and floating parts and with air lift pump 14 for removing sediment from the bottom. The outlet of a common disposing duct of air lift pumps 13 located in secondary sedimentation tanks 4, 5 is disposed in contact chamber 10, whereas the outlet of common disposing duct of air lift pumps 14 located in secondary sedimentation tanks 4, 5 is disposed in one activated sludge chamber 2 and in one stabilization tank 8 with excessive sludge thickening. The outlet of a common disposing duct of air lift pumps 13 located in the secondary sedimentation tanks 6 and 7 is disposed in the second activated sludge chamber 3 and the outlet of the common disposing duct of air lift pumps 14 located in secondary sedimentation tanks 6 and 7 is situated in the second activated sludge chamber 3 and second stabilization tank 9 with excessive sludge thickening. Sand and screenings catcher 1 is equipped with air lift pump 13 for removing surface scum and floating parts and with air lift pump 14 for removing sediment from the bottom, outlets of disposing ducts and being disposed in one stabilization tank 8 with excessive sludge thickening. Air lift pump 13 consists of aerial can 15 and collecting funnel 16 with grip 17, wherein the collecting funnel 16 is connected with the use of an elastomeric conductor 18 with the lower part of the aerial can 15 in whose upper part there is a conductor 19 connected with a compressed air collector, and duct 20 for disposing the surface scum, floating parts and liquid.

Operation of the mechanical-biological sewage treatment plant is as follows: by means of a pipeline, the untreated sewage is driven onto sand and screenings catcher 1. Free from sand and precipitating suspensions, sewage flows into activated sludge chambers 2, 3, in which it is aerated by means of grids 11 and purified. Purified sewage with activated sludge suspension passes to the secondary sedimentation tanks 4, 5, 6 and 7 through overflows 22 which separate the sewage. After sedimentation of activated sludge suspension, treated sewage passes from secondary sedimentation tanks 4, 5, 6, 7 to contact chamber 10 and the sediment is recycled by air lift pumps 14 to activated sludge chambers 2, 3. Excessive sludge is recycled through the same air lift pumps to stabilization tanks 8, 9 with excessive sludge thickening, where it is aerated by grid 12 and over-sediment liquid is disposed by air lift pump 13 to activated sludge chambers 2, 3. After disinfection treated sewage is disposed from contact chamber 10 by pipeline 23.

## Claims

1. Mechanical-biological sewage treatment plant, comprising sand catoher and screenings, two activated sludge chambers, at least two secondary sedimentation tanks, a contact chamber and at least one stabilization tank with sludge thickening, characerised in that sand and screenings catcher /1/ and secondary sedimentation tanks /4, 5, 6, 7/ and stabilization tanks /8, 9/ are equipped with an air lift pump /13/ to remove the surface scum, floating parts and liquids off the surface, whereas each activated sludge chamber /2, 3/ is equipped with aerating grids /11/ for deep aeration and coupled with at least one secondary sedimentation tank /4, 6/ equipped with an air lift pump /14/ for removing sludge from the bottom.

2. Mechanical-biological sewage treatment plant as claimed in claim 1, characterised in that the air lift pump /13/ for removing the surface scum, floating parts and liquid from the surface comprises an aerial can /15/ and collecting funnel /16/ with a grip, wherein the collecting funnel /16/ is connected by means of an elastomeric conductor /18/ with the lower part of the aerial can /15/ which has, in its upper part a conductor /19/ connected with the compressed air collector and conductor /20/ for disposing the surface scum and the floating parts or liquids.

EPAC-36967.5